# EUROPEAN PATENT APPLICATION

(11) **EP 1 343 267 A2**
(43) Date of publication of application: **10.09.2003**
(21) Application number: 03001979.8
(22) Date of filing: 30.01.2003
(51) Int. Cl.: H04L 1/16, H04L 1/18, H04Q 7/10, H04L 29/06, H04L 12/56

(54) **Data transmission confirmation in a wireless communication system**

(30) Priority: 08.02.2002 US 354506 P
(71) Applicant: ASUSTeK Computer Inc., Peitou, Taipei City (TW)
(72) Inventor: Wu, Frank Chih-Hsiang, Shindian City, Taipei (TW)
(74) Representative: TER MEER STEINMEISTER & PARTNER GbR

(57) **Abstract**

The present invention provides a data discard signaling procedure in a wireless communication system. A Radio Link Control (RLC) provides PDCP in-sequence confirmations. The in-sequence confirmation means that confirmations shall be delivered to PDCP in the same order as PDCP PDUs submitted by PDCP. The sending RLC Acknowledge Mode (AM) entity confirms PDCP Service Data Units (SDUs) with Sequence Numbers (SN) that are positively acknowledged by the peer receiving RLC AM entity. In this way, PDCP PDUs and associated PDCP SDUs with SNs not positively acknowledged will not be deleted by the sending PDCP entity. Another solution provided by the present invention is when the SN for a PDCP SDU carried in a PDCP PDU confirmed by the RLC is larger than the smallest SN for the unconfirmed PDCP SDU, PDCP shall not delete this PDCP PDU and its associated SDU confirmed by RLC until the SN for this PDCP SDU indicated by this confirmation is the smallest or earliest SN. Therefore, the present invention provides a procedure for confirming data transmission which efficiently eliminates problems existing in lossless SRNS Relocation and PDCP Sequence Number synchronization and improves wireless communication system performance.

## Description

### BACKGROUND OF THE INVENTION

### Field of the Invention

The present invention relates to a wireless communications protocol. More specifically, the present invention discloses a procedure for confirming data transmission.

### Description of the Prior Art

Wireless communication systems have evolved rapidly. New wireless communication methods, services and standards have been developed throughout the world. Particularly over the last few years, this evolution has accelerated, during which the mobile radio communications industry has grown by orders of magnitude. Numerous technological advances that have made portable radio equipment smaller, cheaper and more reliable. The exponential growth of mobile telephony will continue to rise in the coming decades as well, as this wireless network interacts with and eventually overtakes the existing wireline networks.

Conventional wireline systems provide a communications path between the source and the destination. This technique establishes a connection or allocation of system resources between a base station and mobile terminal. Although such connections are useful in maintaining voice communications, data transmissions are often followed by lengthy periods of inactivity, resulting in a waste of resources.

Additionally, system resources may be wasted due to unnecessary discarding of data or unnecessary retransmission of data. Furthermore, wireless communication system integrity may be compromised due to data loss or synchronization problems. Therefore, there is need for an improved communication protocol which reduces wasting of system resources and improves wireless communication system performance.

### SUMMARY OF THE INVENTION

To achieve at least these advantages and in order to overcome the disadvantages of the conventional method in accordance with the purpose of the invention as embodied and broadly described herein, the present invention provides a procedure for confirming data transmission which efficiently eliminates problems existing in lossless Serving Radio Network Subsystem (SRNS) Relocation and Packet Data Convergence Protocol (PDCP) Sequence Number synchronization and improves wireless communication system performance.

Packet Data Convergence Protocol (PDCP), , provides its services to the upper layers, e.g. IP and PPP. PDCP performs the following functions: header compression and decompression of IP data streams (e.g., TCP/IP and RTP/UDP/IP headers for IPv4 and IPv6) at the transmitting and receiving entity respectively, transfer of user data, and maintenance of PDCP sequence numbers (SN) for radio bearers that are configured to support lossless SRNS Relocation. PDCP uses the services provided by the Radio Link Control (RLC) sublaye.

Lossless SRNS Relocation is only applicable when an RLC is configured for in-sequence delivery and acknowledged mode (AM). The support of lossless SRNS Relocation is configured by an upper layer. PDCP sequence numbering is applied when lossless SRNS Relocation is supported. PDCP Sequence Numbers serve to acknowledge previously transmitted PDCP service data units (SDUs) prior to relocation. The value of the PDCP sequence number ranges from 0 to 65535. The PDCP SN window size indicates the maximum number of PDCP SDUs, not confirmed to have been successfully transmitted to the peer entity by an RLC layer, that can be numbered at any given time. The PDCP SN window size is configured by upper layers. PDCP sequence numbers are set to "0" when the PDCP entity is set-up for the first time.

For radio bearers configured to support lossless SRNS Relocation, when PDCP requests AM RLC to transmit a PDCP protocol data unit (PDU), it requires AM RLC to confirm the reception of this PDCP PDU by the peer-RLC AM entity. Once all acknowledge mode data (AMD) PDUs that make up the PDCP PDU are positively acknowledged by the receiving AM RLC entity, the transmitting AM RLC entity notifies PDCP. Confirmations delivered by an RLC may or may not be in the same sequence as PDCP PDUs submitted to an RLC. When PDCP receives the RLC confirmation, PDCP may delete the PDCP PDU and its associated PDCP SDU indicated by this confirmation, from buffer to save memory space. If PDCP deletes the PDCP PDU and its associated PDCP SDU indicated by the RLC confirmation, problems exist in lossless SRNS Relocation and PDCP Sequence Number synchronization.

Note that the sending PDCP entity is a PDCP entity that transmits PDCP PDUs submitted to the RLC. The receiving PDCP entity is a PDCP entity that receives PDCP PDUs delivered from the RLC. The sending RLC AM entity is an RLC AM entity that transmits RLC PDUs. The receiving RLC AM entity is an RLC AM entity that receives RLC PDUs.

Assume that the sending PDCP entity transmits 10 PDCP Data PDUs that carry in its Data field a compressed or uncompressed PDCP SDU. The sequence numbers for these 10 PDCP SDUs are from 0 to 9. Also, assume the sending PDCP entity receives the sending RLC AM entity confirmations that indicate to PDCP Data PDUs carrying PDCP SDUs with SN = 0, 1, 5, 7, 8, and 9 received successfully by the receiving RLC AM entity. Therefore these PDCP PDUs and associated SDUs confirmed by the sending RLC AM entity are deleted from the buffer and PDCP Data PDUs and associated PDCP SDUs with SN = 2, 3, 4, and 6 are still in the buffer.

Because in-sequence delivery is configured, the receiving RLC AM entity only delivers PDCP Data PDUs carrying PDCP SDUs with SN = 0 and 1 to the receiving PDCP entity. AMD PDUs that make up PDCP Data PDUs carrying PDCP SDUs with SN = 5, 7, 8 and 9 are in the RLC buffer.

However, problems can occur following the above scenario. At the time lossless SRNS Relocation occurs, sending and receiving RLC AM entities are re-established. The receiving RLC AM entity discards all AMD PDUs, and sending and receiving PDCP entities exchange Receive SNs during SRNS Relocation. The sending PDCP entity receives next expected PDCP Receive SN = 2 sent by the receiving PDCP entity, and starts transmitting PDCP Data PDUs carrying PDCP SDUs from SN = 2. PDCP Data PDUs carrying PDCP SDUs with SN = 2, 3...9 are to be retransmitted, which is impossible because PDCP Data PDUs carrying PDCP SDUs with SN = 5, 7, 8, and 9 have been deleted by the sending PDCP entity before SNRS Relocation.

Another problem can occur following the above scenario. At the time RLC reset occurs, the receiving RLC AM entity discards all received AMD PDUs. According to the above description, the sending PDCP entity shall submit one PDCP SeqNum PDU that carries in its Data field the first unconfirmed PDCP SDU and in its Sequence Number field the SN of this SDU to the sending RLC AM entity following RLC reset. In this case, the first unconfirmed PDCP SDU is PDCP SDU with SN = 2. PDCP Data PDUs carrying PDCP SDUs with SN = 3...9 are to be retransmitted, which is impossible because PDCP Data PDUs carrying PDCP SDUs with SN = 5, 7, 8, and 9 have been deleted by the sending PDCP entity before RLC reset.

Therefore, the present invention provides solutions to overcome at least the above problems.

The RLC provides PDCP in-sequence confirmations. The in-sequence confirmation means that confirmations are delivered to PDCP in the same sequence as PDCP PDUs submitted by PDCP. In the previous scenario, with the present invention, the sending RLC AM entity confirms PDCP SDUs with SN = 0 and 1 only, and does not confirm PDCP SDUs with SN = 5, 7, 8, and 9. In this way, PDCP PDUs and associated PDCP SDUs with SN = 5, 7, 8, and 9 will not be deleted by the sending PDCP entity. The sending RLC AM entity does not confirm PDCP PDU and its associated SDU with SN = 5 until PDCP PDUs and associated SDUs with SN = 2, 3, and 4 are positively acknowledged by the peer receiving RLC AM entity. Similarly, the sending RLC AM entity does not confirm PDCP PDUs and associated PDCP SDUs with SN = 7, 8, and 9 until PDCP PDUs and the associated PDCP SDUs with SN = 2, 3, 4, and 6 are positively acknowledged by the peer receiving RLC AM entity.

An additional solution is provided in another embodiment of the present invention to overcome at least the aforementioned problems.

When the SN for a PDCP SDU carried in a PDCP PDU confirmed by the RLC is larger than the smallest SN for the unconfirmed PDCP SDU, PDCP shall not delete this PDCP PDU and its associated SDU confirmed by the RLC until the SN for this PDCP SDU indicated by this confirmation is the smallest or earliest SN. Referring to the previously stated scenario, with this invention, the sending RLC AM entity confirms PDCP PDUs and associated SDUs with SN = 0, 1, 5, 7, 8, and 9, and the smallest SN for the unconfirmed PDCP SDU is 2. PDCP PDUs and associated PDCP SDUs with SN=0 and 1 are deleted. PDCP PDUs and associated PDCP SDUs with SN = 5, 7, 8, and 9 are not deleted for the moment. PDCP PDU and its associated SDU with SN = 5 are not deleted until PDCP PDUs and associated SDUs with SN = 2, 3, and 4 are confirmed. PDCP PDUs and associated PDCP SDUs with SN = 7, 8, and 9 are not deleted until PDCP PDUs and associated PDCP SDUs with SN = 2, 3, 4, and 6 are confirmed.

Therefore, the present invention provides a procedure for confirming data transmission which efficiently eliminates problems existing in lossless SRNS Relocation and PDCP Sequence Number synchronization and improves wireless communication system performance.

These and other objectives of the present invention will become obvious to those of ordinary skill in the art after reading the following detailed description of preferred embodiments.

It is to be understood that both the foregoing general description and the following detailed description are exemplary, and are intended to provide further explanation of the invention as claimed.

### BRIEF DESCRITPION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Figure 1 is a drawing illustrating an RLC sublayer structure according to an embodiment of the present invention; and
Figure 2 is a drawing illustrating a PDCP PDU structure according to an embodiment of the present invention.

### DESCRIPTION OF THE PREFERRED EMBODIMENTS

Reference will now be made in detail to the preferred embodiments of the present invention, examples of which are illustrated in the accompanying drawings. Wherever possible, the same reference numbers are used in the drawings and the description to refer to the same or like parts.

Packet Data Convergence Protocol (PDCP) provides its services to the upper layers, e.g. IP and PPP. PDCP performs the following functions: header compression and decompression of IP data streams (e.g., TCP/IP and RTP/UDP/IP headers for IPv4 and IPv6) at the transmitting and receiving entity respectively, transfer of user data, and maintenance of PDCP sequence numbers for radio bearers that are configured to support lossless SRNS Relocation. PDCP uses the services provided by the Radio Link Control (RLC) sublayer.

Lossless SRNS Relocation is only applicable when an RLC is configured for in-sequence delivery and acknowledged mode (AM). The support of lossless SRNS Relocation is configured by upper layer. PDCP sequence numbering shall be applied when lossless SRNS Relocation is supported. PDCP Sequence Numbers serve to acknowledge previously transmitted PDCP SDUs prior to relocation. The value of the PDCP sequence number ranges from 0 to 65535. The PDCP SN window size indicates the maximum number of PDCP SDUs, not confirmed to have been successfully transmitted to the peer entity by RLC layer, that can be numbered at any given time. The PDCP SN window size is configured by upper layers. PDCP sequence numbers are set to "0" when the PDCP entity is set-up for the first time.

In the following the "submission/reception of a PDCP SDU to/from lower layer" is used as a synonym for the submission/reception of a PDCP Data PDU or a PDCP SeqNum PDU to/from lower layer that carries in its Data field a compressed or uncompressed PDCP SDU. In case PDCP sequence numbers are applied, for each radio bearer:

In the user equipment (UE):
- the UL_Send PDCP sequence number shall be set to "0" for the first PDCP SDU submitted to lower layer;
- the UL_Send PDCP sequence number shall be incremented by "1" for the next PDCP SDU submitted to lower layer;
- the DL_Receive PDCP sequence number shall be set to "0" for the first PDCP SDU received from lower layer;
- the DL_Receive PDCP sequence number shall be incremented by "1" for the next PDCP SDU received from lower layer.

In the universal mobile telecommunications system terrestrial radio access network (UTRAN):
- the DL_Send PDCP sequence number should be set to "0" for the first PDCP SDU submitted to lower layer;
- the DL_Send PDCP sequence number should be incremented by "1" for the next PDCP SDU submitted to lower layer;
- the UL_Receive PDCP sequence number should be set to "0" for the first PDCP SDU received from lower layer;
- the UL_Receive PDCP sequence number should be incremented by "1" for the next PDCP SDU received from lower layer.

PDCP sequence numbers are not decremented in a PDCP entity.

For radio bearers that are configured to support lossless SRNS Relocation, the PDCP entity shall:
- if a PDCP entity has to synchronise the PDCP SN following a RLC reset or RLC re-establishment not caused by a SRNS Relocation; or
- if the UE/UTRAN PDCP entity receives an invalid "next expected UL/DL Receive PDCP sequence number" from upper layer after Relocation:

- trigger the PDCP SN synchronization procedure by submitting one PDCP SeqNum PDU to lower layer;
- consider that the synchronization procedure is complete on confirmation by lower layer of the successful transmission of the PDCP SeqNum PDU.

In the UE/UTRAN, the "next expected UL/DL_Receive PDCP sequence number" is considered invalid if its value is less than the Send PDCP SN of the first transmitted but not yet acknowledged PDCP SDU or greater than that of the first unsent PDCP SDU.

On receiving a PDCP SeqNum PDU:
- the UE PDCP entity shall:

- set the value of the DL_Receive PDCP sequence number to the value indicated in the PDCP SeqNum PDU;
- the UTRAN PDCP entity should:
   - set the value of the UL_Receive PDCP sequence number to the value indicated in the PDCP SeqNum PDU.

In case of a lossless SRNS Relocation procedure:
- the UTRAN should send to the UE the next expected UL_Receive PDCP sequence number; and
- the UE shall send to the UTRAN the next expected DL_Receive PDCP sequence number.

This information exchange synchronizes the Sequence Numbers at the UE and UTRAN PDCP entities.

When requested by the upper layer, for each radio bearer configured to support lossless SRNS Relocation, the PDCP sublayer in the source RNC should forward the following to the target RNC:
- the UL_Receive PDCP SN of the next PDCP SDU expected to be received from the UE;
- the DL_Send PDCP SN of the first transmitted but not yet acknowledged PDCP SDU;
- the transmitted but not yet acknowledged PDCP SDUs together with their related DL_Send PDCP SNs; and
- the not yet transmitted PDCP SDUs.

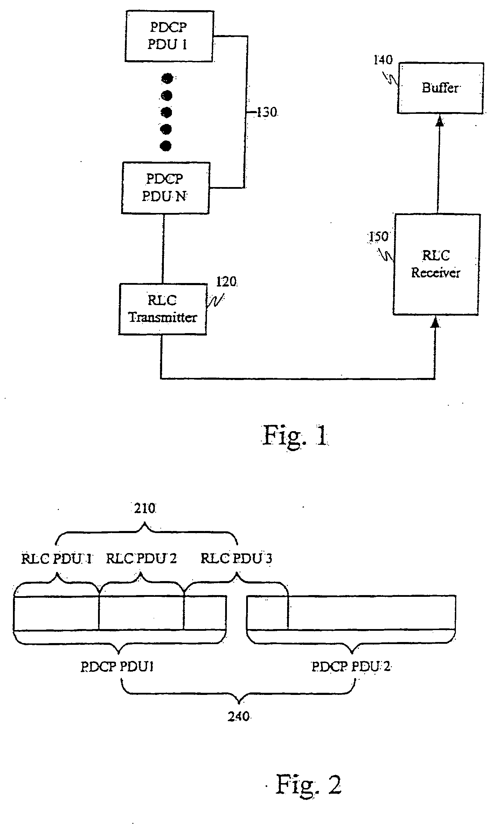

Refer to Figure 1, which is a drawing illustrating an RLC sublayer structure and Figure 2, which is a drawing illustrating a PDCP PDU structure.

For radio bearer configured to support lossless SRNS Relocation, when PDCP requests AM RLC to transmit a PDCP PDU 130, it requires AM RLC to confirm the reception of this PDCP PDU 130 by the peer-RLC AM entity 150. Once all AMD PDUs 210 that make up the PDCP PDU 240 are positively acknowledged by the receiving AM RLC entity 150, the transmitting AM RLC entity 120 notifies PDCP. Confirmations delivered by RLC may or may not be in the same sequence as PDCP PDUs 130 submitted to RLC. When PDCP receives the RLC confirmation, PDCP may delete the PDCP PDU 240 and its associated PDCP SDU indicated by this confirmation from buffer to save memory space. If PDCP deletes PDCP PDU 240 and its associated PDCP SDU indicated by the RLC confirmation, problems exist in lossless SRNS Relocation and PDCP Sequence Number synchronization. See the following scenario and problems.

Before looking at the following scenario and problems, the following terminologies used in the description of the scenario and problems are defined:
The sending PDCP entity is a PDCP entity that transmits PDCP PDUs submitted to RLC.
The receiving PDCP entity is a PDCP entity that receives PDCP PDUs delivered from RLC.
The sending RLC AM entity is an RLC AM entity that transmits RLC PDUs 210.
The receiving RLC AM entity is an RLC AM entity that receives RLC PDUs 210.

Assume that the sending PDCP entity transmits 10 PDCP Data PDUs 240 that carry in its Data field a compressed or uncompressed PDCP SDU. The sequence numbers (SN) for these 10 PDCP SDUs 240 are from 0 to 9. The sending PDCP entity receives the sending RLC AM entity confirmations that indicate to PDCP Data PDUs 240 carrying PDCP SDUs with SN = 0, 1, 5, 7, 8, and 9 received successfully by the receiving RLC AM entity. Therefore, these PDCP PDUs 240 and associated SDUs confirmed by the sending RLC AM entity are deleted from the buffer and PDCP Data PDUs 240 and associated PDCP SDUs with SN = 2, 3, 4, and 6 are still in the buffer.

Because in-sequence delivery is configured, the receiving RLC AM entity only delivers PDCP Data PDUs 240 carrying PDCP SDUs with SN = 0 and 1 to the receiving PDCP entity. AMD PDUs that make up PDCP Data PDUs 240 carrying PDCP SDUs with SN = 5, 7, 8 and 9 are in the RLC buffer.

However, problems can occur following the above scenario. At the time lossless SRNS Relocation occurs, sending and receiving RLC AM entities are re-established. The receiving RLC AM entity 150 discards all AMD PDUs, and sending and receiving PDCP entities exchange Receive SNs during SRNS Relocation. The sending PDCP entity 120 receives next expected PDCP Receive SN = 2 sent by the receiving PDCP entity 150, and starts transmitting PDCP Data PDUs 240 carrying PDCP SDUs from SN = 2. PDCP Data PDUs 240 carrying PDCP SDUs with SN = 2, 3...9 are to be retransmitted, which is impossible because PDCP Data PDUs 240 carrying PDCP SDUs with SN = 5, 7, 8, and 9 have been deleted by the sending PDCP entity 120 before SNRS Relocation.

Another problem can occur following the above scenario. At the time RLC reset occurs, the receiving RLC AM entity 150 discards all received AMD PDUs. According to the above description, the sending PDCP entity 120 shall submit one PDCP SeqNum PDU that carries in its Data field the first unconfirmed PDCP SDU and in its Sequence Number field the SN of this SDU, to the sending RLC AM entity 120 following RLC reset. In this case, the first unconfirmed PDCP SDU is PDCP SDU with SN = 2. PDCP Data PDUs 240 carrying PDCP SDUs with SN = 3...9 are to be retransmitted, which is impossible because PDCP Data PDUs 240 carrying PDCP SDUs with SN = 5, 7, 8, and 9 have been deleted by the sending PDCP entity before RLC reset.

Therefore, an embodiment of the present invention provides a following solution to overcome at least the above problems.

The RLC provides PDCP in-sequence confirmations. The in-sequence confirmation means that confirmations are delivered to PDCP in the same sequence as PDCP PDUs submitted by PDCP. In the above scenario, with the present invention, the sending RLC AM entity confirms PDCP SDUs with SN = 0 and 1 only, and does not confirm PDCP SDUs with SN = 5, 7, 8, and 9. In this way, PDCP PDUs and associated PDCP SDUs with SN = 5, 7, 8, and 9 will not be deleted by the sending PDCP entity. The sending RLC AM entity does not confirm PDCP PDU and its associated SDU with SN = 5 until PDCP PDUs and associated SDUs with SN = 2, 3, and 4 are positively acknowledged by the peer receiving RLC AM entity. Similarly, the sending RLC AM entity does not confirm PDCP PDUs and associated PDCP SDUs with SN = 7, 8, and 9 until PDCP PDUs and the associated PDCP SDUs with SN = 2, 3, 4, and 6 are positively acknowledged by the peer receiving RLC AM entity.

An additional solution is provided in an embodiment of the present invention to overcome at least the aforementioned problems.

When the SN for a PDCP SDU carried in a PDCP PDU confirmed by the RLC is larger than the smallest SN for the unconfirmed PDCP SDU, PDCP shall not delete this PDCP PDU and its associated SDU confirmed by RLC until the SN for this PDCP SDU indicated by this confirmation is the smallest or earliest SN. Refering to the previously stated scenario, with the present invention, the sending RLC AM entity confirms PDCP PDUs and associated SDUs with SN = 0, 1, 5, 7, 8, and 9, and the smallest SN for the unconfirmed PDCP SDU is 2. PDCP PDUs and associated PDCP SDUs with SN=0 and 1 are deleted. PDCP PDUs and associated PDCP SDUs with SN = 5, 7, 8, and 9 are not deleted for a moment. PDCP PDU and its associated SDU with SN = 5 are not deleted until PDCP PDUs and associated SDUs with SN = 2, 3, and 4 are confirmed. PDCP PDUs and associated PDCP SDUs with SN = 7, 8, and 9 are not deleted until PDCP PDUs and associated PDCP SDUs with SN = 2, 3, 4, and 6 are confirmed.

Therefore, the present invention provides a procedure for confirming data transmission which efficiently eliminates problems existing in lossless SRNS Relocation and PDCP Sequence Number synchronization and improves wireless communication system performance.

Note that the above description of the present invention is shown by example in a PDCP and RLC application. However, the benefits and advantages of the present invention can be enjoyed when the present invention is practiced in other applications, systems, or devices. The present invention is not limited to a PDCP or RLC application. For example, an upper layer could be used to replace the PDCP in the examples above. Embodiments of the present invention also comprise applications in alternative systems or environments. An advantage of the present invention is that it can be utilized in a wide variety of applications, protocols, systems, and devices thereby improving the performance and integrity of the application in which the present invention is utilized.

It will be apparent to those skilled in the art that various modifications and variations can be made to the present invention without departing from the scope or spirit of the invention. In view of the foregoing, it is intended that the present invention cover modifications and variations of this invention provided they fall within the scope of the invention and its equivalent.

## Claims

1. A method for improving performance in a wireless communication system comprising:
transmitting a plurality of packet data convergence protocol (PDCP) protocol data units (PDUs) by a PDCP entity;
receiving the plurality of PDCP PDUs by an RLC entity;
transmitting a confirmation by the RLC entity for each of the plurality of PDCP PDUs that is received correctly;
receiving the confirmation by the PDCP entity; and
deleting the PDCP PDU that is associated with the confirmation by the PDCP entity.

2. The method for improving performance in the wireless communication system of claim 1, wherein confirmations are transmitted in a same sequence as the PDCP PDUs were transmitted by the PDCP entity if support of lossless SRNS Relocation is configured for the PDCP entity.

3. The method for improving performance in the wireless communication system of claim 2, further comprising deleting the PDCP SDU associated with the deleted PDCP PDU.

4. The method for improving performance in the wireless communication system of claim 1, wherein confirmations are transmitted in a same sequence as the PDCP SDUs were transmitted by the PDCP entity if support of lossless SRNS Relocation is configured for the PDCP entity.

5. The method for improving performance in the wireless communication system of claim 4, further comprising deleting the PDCP SDU associated with the deleted PDCP PDU.

6. The method for improving performance in the wireless communication system of claim 1, wherein if support of lossless SRNS Relocation is configured for the PDCP entity and no sequence number for an unconfirmed PDCP SDU is smaller than the sequence number for a PDCP SDU indicated by the confirmation, the PDCP entity deletes the PDCP PDU indicated by the confirmation.

7. The method for improving performance in the wireless communication system of claim 6, whereby the PDCP entity deletes the PDCP SDU associated with the deleted PDCP PDU.
